(19) Europäisches Patentamt
European Patent Office
Office européen des brevets

(11) Veröffentlichungsnummer: **0 072 516**
**B1**

# (12) EUROPÄISCHE PATENTSCHRIFT

(45) Veröffentlichungstag der Patentschrift: **25.06.86**

(51) Int. Cl.⁴: **C 09 B 45/16** // D06P1/10, D06P3/04

(21) Anmeldenummer: **82107171.9**

(22) Anmeldetag: **09.08.82**

(54) **Chrommischkomplex-Farbstoffe.**

(30) Priorität: **18.08.81 DE 3132609**

(43) Veröffentlichungstag der Anmeldung: **23.02.83 Patentblatt 83/8**

(45) Bekanntmachung des Hinweises auf die Patenterteilung: **25.06.86 Patentblatt 86/26**

(84) Benannte Vertragsstaaten: **CH DE FR GB IT LI**

(56) Entgegenhaltungen:
**DE - B - 1 008 254**
**DE - B - 1 225 318**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Scholl, Walter, Dr., Bilharzstrasse 22, D-5000 Koeln 80 (DE)**

EP 0 072 516 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind unsymmetrische Komplexfarbstoffe, die in Form der freien Säure der Formel

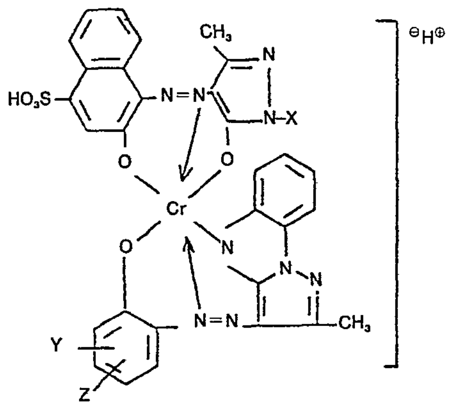

(I)

entsprechen, worin

X Wasserstoff, Alkyl oder Aryl,

Y Wasserstoff, Nitro oder Chlor und

Z Wasserstoff, Nitro, Chlor, Alkyl, Alkoxy, Alkylsulfonyl, Arylsulfonyl oder $SO_2NW_1W_2$ und

$W_1$ und $W_2$ Wasserstoff oder Alkyl bedeuten, mit der Massgabe, dass Y und Z nicht gleichzeitig für Nitro stehen.

Geeignete im beliebigen Zusammenhang genannte Alkyl- und Alkoxygruppen sind solche mit 1–4 C-Atomen, die vorzugsweise nicht weiter substituiert sind. Besonders bevorzugt sind Methyl, Ethyl bzw. Methoxy und Ethoxy.

Geeignete Arylreste sind insbesondere gegebenenfalls substituierte Phenylreste mit Substituenten wie Halogen, insbesondere Cl und Br, $NO_2$, $C_1$–$C_4$-Alkoxy, $C_1$–$C_4$-Alkyl.

Bevorzugte Farbstoffe sind solche der Formel

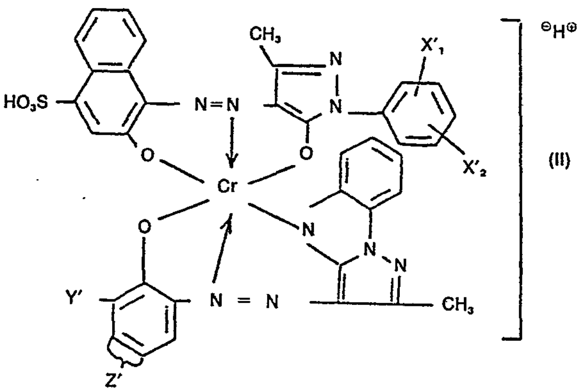

(II)

worin

$X'_1$ und $X'_2$ H, Cl, $CH_3$ oder $OCH_3$,

Y' H, Cl oder $NO_2$,

Z' H, $NO_2$ oder $SO_2W'_1W'_2$, Cl

$W'_1$ und $W'_2$ H oder $C_1$–$C_2$-Alkyl bedeuten, mit der Massgabe, dass Y' und Z' nicht gleichzeitig $NO_2$ bedeuten.

Die neuen Chromkomplexfarbstoffe werden in an sich bekannter Weise (vgl. DE-A 2 500 550 und 2 504 787) hergestellt, indem man den einen der Azofarbstoffe der Formel

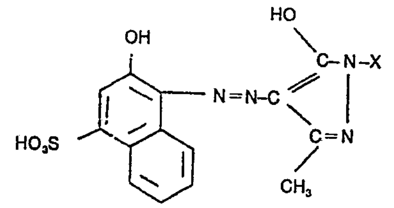

(III)

und

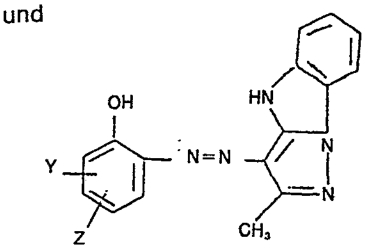

(IV)

mit einem chromabgebenden Mittel in den 1:1-Chromkomplex überführt und diesen anschliessend mit dem nichtmetallisierten Farbstoff der Formel (IV) oder (III) umsetzt. Vorzugsweise stellt man den 1:1-Chromkomplex aus dem Farbstoff der Formel (III) her und lagert den Farbstoff der Formel (IV) an denselben an.

Die Monoazofarbstoffe der Formel (III) werden in bekannter Weise durch Kuppeln von diazotierter 1-Amino-2-hydroxy-naphthalin-4-sulfosäure auf ein 3-Methyl-5-pyrazolon erhalten, diejenigen der Formel (IV) durch Kuppeln eines diazotierten Aminophenols auf 3'-Methylpyrazolo-[1',5':1,2]-benzimidazol.

Geeignete Kupplungskomponenten für Farbstoffe der Formel (III) sind z.B.

1-(2'-Methyl-phenyl)-3-methyl-5-pyrazolon,
1-(2'-Ethylphenyl)-3-methyl-5-pyrazolon,
1-(4'-Bromphenyl)-3-methyl-5-pyrazolon,
1-(2'-Chlor-6'-methylphenyl)-3-methyl-5-pyrazolon,
1-Phenyl-3-methyl-5-pyrazolon,
1-(2'-, 3'- oder 4'-Chlorphenyl)-3-methyl-5-pyrazolon,
1-(2', 5'- oder 3', 4'-Dichlorphenyl)-3-methyl-5-pyrazolon,
1-(2',5'-Dibromphenyl)-3-methyl-5-pyrazolon,
1-(2',4',6'-Trichlorphenyl)-3-methyl-5-pyrazolon,
1-(4'-Methoxyphenyl)-3-methyl-5-pyrazolon.

Als Diazokomponenten für Farbstoffe der Formel (IV) kommen in Betracht:

4-Sulfonsäureamid-2-amino-1-hydroxybenzol
4-Sulfonsäuremethylamid-2-amino-1-hydroxybenzol
4-Sulfonsäuredimethylamid-2-amino-1-hydroxybenzol
4-Sulfonsäureanilid-2-amino-1-hydroxybenzol
4-Ethyl-sulfon-2-amino-1-hydroxy-benzol
5-Sulfonsäureamid-2-amino-1-hydroxybenzol
5-Sulfonsäuremethylamid-2-amino-1-hydroxybenzol
5-Sulfonsäure-dimethylamid-2-amino-1-hydroxybenzol
5-Sulfonsäureanilid-2-amino-1-hydroxybenzol
2-Amino-1-hydroxybenzol,
4- oder 5-Chlor-2-amino-1-hydroxybenzol,
4- oder 5-Nitro-2-amino-1-hydroxybenzol,

4-Methyl-2-amino-1-hydroxybenzol,
4-Methoxy-2-amino-1-hydroxybenzol,
4,6-Dichlor-2-amino-1-hydroxybenzol,
4-Chlor-5-nitro-2-amino-1-hydroxybenzol,
4-Chlor-6-nitro-2-amino-1-hydroxybenzol,
6-Chlor-4-nitro-2-amino-1-hydroxybenzol,
6-Nitro-4-methyl-2-amino-1-hydroxybenzol.

Die Überführung der Farbstoffe der Formel (III) oder (IV) in den 1:1-Chromkomplex erfolgt nach üblichen, an sich bekannten Methoden (vgl. z.B. DE-A 1 008 254, 1 012 007 und 1 225 318), z.B. indem man ihn in saurem Medium mit einem Salz des dreiwertigen Chroms, wie Chromformiat, Chromsulfat oder Chromfluorid, bei Siedetemperatur oder gegebenenfalls bei 100 °C übersteigenden Temperaturen umsetzt. Dreiwertiges Chrom kann auch im Reaktionsgemisch aus Chrom-IV-Verbindungen erzeugt werden, wenn man gleichzeitig ein Reduktionsmittel zugibt, wie z.B. Glukose. Man kann die Metallisierung auch in Gegenwart von organischen Lösungsmitteln vornehmen. Bevorzugt arbeitet man dann möglichst unter Ausschluss von Wasser in organischen Lösungsmitteln wie Alkoholen oder Ketonen.

Im allgemeinen erweist es sich als vorteilhaft, die beim vorliegenden Verfahren benötigten Ausgangsfarbstoffe nach ihrer Herstellung und Ausscheidung nicht nur trocknen, sondern als feuchte Paste weiter zu verarbeiten.

Vorteilhafterweise überführt man den Sulfogruppenhaltigen Farbstoff in den 1:1-Cr-Komplex.

Die Umsetzung des 1:1-Chromkomplexes des Farbstoffes der Formel (III) bzw. (IV) mit dem metallfreien Farbstoff der Formel (IV) bzw. (III) erfolgt zweckmässig in neutralem bis schwach alkalischem Medium bei z.B. Temperaturen zwischen 50 und 120 °C. Man kann in organischen Lösungsmitteln arbeiten oder in wässriger Lösung, wobei Zusätze von Lösungsmitteln wie z.B. von Alkoholen oder Dimethylformamid gegebenenfalls die Umsetzung fördern können. Es empfiehlt sich im allgemeinen, möglichst äquivalente Mengen des chromhaltigen 1:1-Komplexes und des metallfreien Farbstoffes miteinander umzusetzen, wobei das Molekularverhältnis zwischen metallfreiem Farbstoff und 1:1-Komplex zweckmässig mindestens 0,85:1 und höchstens 1:0,85 beträgt; ein Überschuss an metallhaltigem Farbstoff wirkt sich in der Regel weniger nachteilig aus als ein solcher an metallfreiem Farbstoff.

Anstelle einheitlicher Farbstoffe der Formel (IV) oder (III) kann man auch Gemische entsprechender Azofarbstoffe verwenden.

Die neuen Chrom-Mischkomplexe werden vorteilhaft in Form ihrer Salze, insbesondere Alkali- (z.B. Na und Li) oder auch Ammoniumsalze oder Salze von organischen Aminen mit positiv geladenem Stickstoffatom isoliert und eignen sich vor allem zum Färben und Bedrucken amidgruppenhaltiger Materialien, wie Seide, Leder sowie für synthetische Polyamide und insbesondere Wolle. Das Färben mit diesen preiswerten Farbstoffen erfolgt in üblicher Weise. Die erhaltenen Färbungen sind gleichmässig und zeigen gute Allgemeinechtheiten.

Beispiel 1

150 g einer wässrigen Farbstoffpaste, die 0,1 Mol Farbstoff
2-Aminophenol-4-sulfonamid,
→ 3-Methylpyrazolo-[1',5':1,2]-benzimidazol
enthält, sowie 65 g einer wässrigen Paste, die 0,1 Mol des 1:1-Chromkomplexes des Azofarbstoffs
1-Amino-2-hydroxy-naphthalin-4-sulfonsäure →
1-Phenyl-3-methyl-pyrazolon-5
enthält, werden in 500 ml Wasser verrührt, auf 70–80 °C erwärmt und bei pH 7–8 unter Zusatz von Natronlauge 40%ig bis zur Beendigung der Mischkomplexbildung gerührt. Man lässt auf 70 °C abkühlen und fällt den Chrommischkomplexfarbstoff mit Natriumchlorid aus. Man saugt den Farbstoff ab, trocknet ihn bei 70° i.V. und erhält ein rotbraunes Pulver, das Wolle und Polyamid in klaren blaustichigen Rottönen mit guter Lichtechtheit färbt.

Weitere Farbstoffe mit ähnlichen Eigenschaften erhält man in analoger Weise durch Umsetzen der 1:1-Chromkomplexe der in der folgenden Spalte I angegebenen Monoazoverbindungen mit den in Spalte II aufgeführten, metallfreien Monoazoverbindungen.

| I. | II. | Farbton auf Wolle oder Polyamid |
|---|---|---|
| 2) 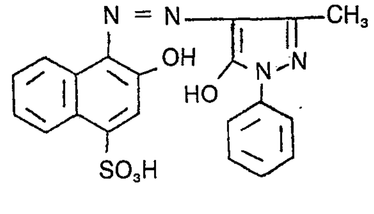 | 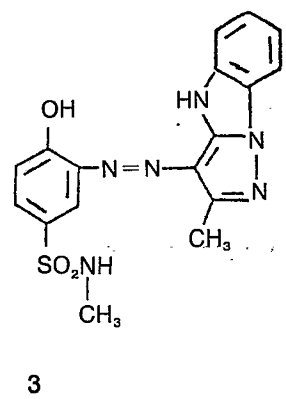 | blaustichig Rot |

| | I. | II. | Farbton auf Wolle oder Polyamid |
|---|---|---|---|
| 3) | 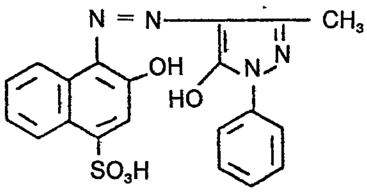 | 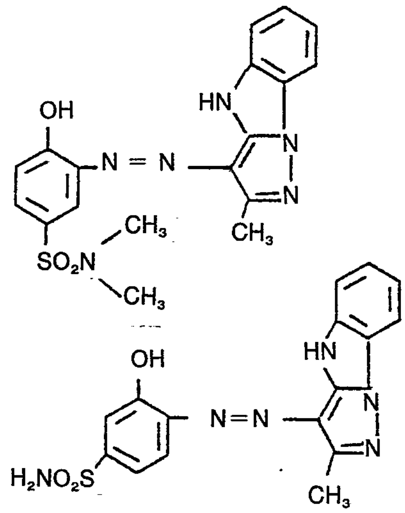 | blaustichig Rot |
| 4) | 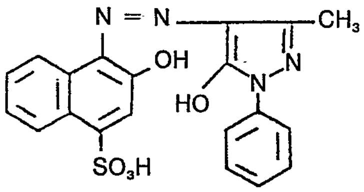 | | blaustichig Rot |
| 5) | 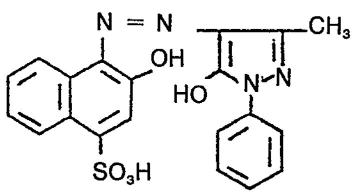 | 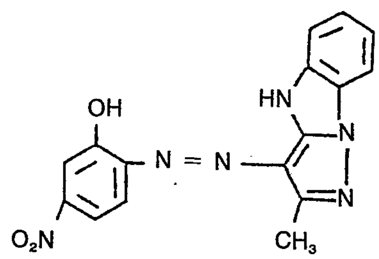 | blaustichig Rot |
| 6) | 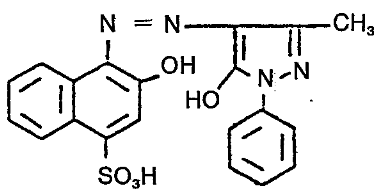 | 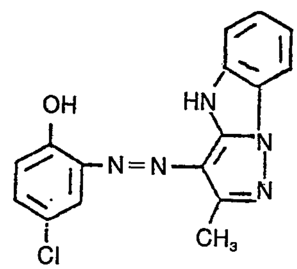 | blaustichig Rot |
| 7) | 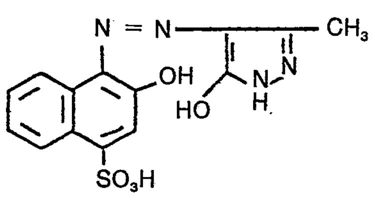 | 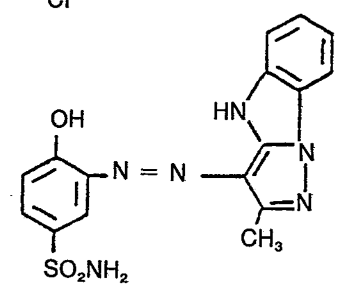 | blaustichig Rot |
| 8) | 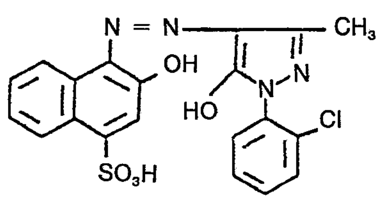 | 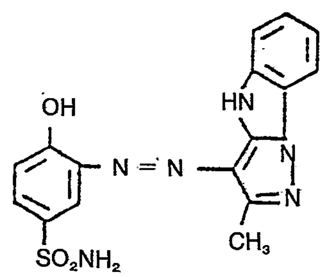 | blaustichig Rot |

**Patentansprüche**

1. Chromkomplexfarbstoffe, die in Form der freien Säure der Formel

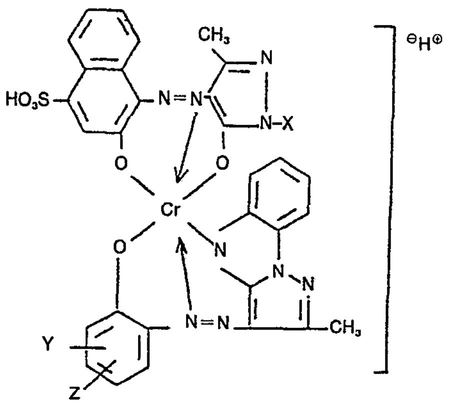

(I)

entsprechen, worin

X Wasserstoff, Alkyl oder Aryl,

Y Wasserstoff, Nitro oder Chlor und

Z Wasserstoff, Nitro, Chlor, Alkyl, Alkoxy, Alkylsulfonyl, Arylsulfonyl oder $SO_2NW_1W_2$ und

$W_1$ und $W_2$ Wasserstoff oder Alkyl bedeuten,

mit der Massgabe, dass Y und Z nicht gleichzeitig für Nitro stehen.

2. Chromkomplexfarbstoffe gemäss Anspruch 1, dadurch gekennzeichnet, dass die darin genannten Alkyl- und Alkoxyreste 1–4 C-Atome enthalten und die Arylreste gegebenenfalls durch Cl, Br, $NO_2$, $C_1$–$C_4$-Alkoxy oder $C_1$–$C_4$-Alkyl substituierte Phenylreste sind.

3. Chromkomplexfarbstoffe gemäss Anspruch 1 der Formel

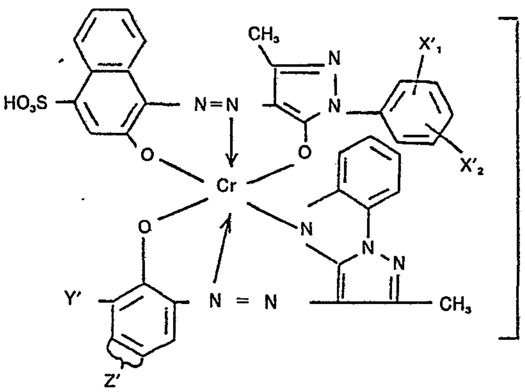

(II)

worin

$X'_1$ und $X'_2$ H, Cl, $CH_3$ oder $OCH_3$,

Y' H, Cl oder $NO_2$,

Z' H, $NO_2$ oder $SO_2W'_1W'_2$, Cl

$W'_1$ und $W'_2$ H oder $C_1$–$C_2$-Alkyl bedeuten,

mit der Massgabe, dass Y' und Z' nicht gleichzeitig $NO_2$ bedeuten.

4. Chromkomplexfarbstoff gemäss Anspruch 1 der Formel

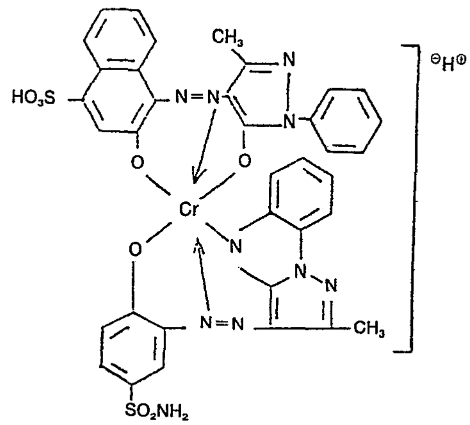

5. Verfahren zur Herstellung von Farbstoffen gemäss Anspruch 1, dadurch gekennzeichnet, dass man den einen der Azofarbstoffe der Formeln

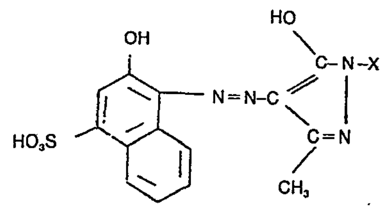

(III)

und

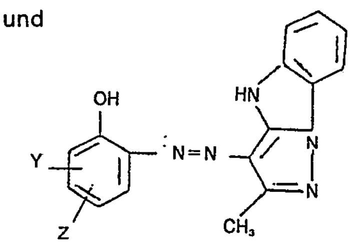

(IV)

mit einem chromabgebenden Mittel in den 1:1-Chromkomplex überführt und diesen anschliessend mit dem nichtmetallisierten Farbstoff der Formel (IV) oder (III) umsetzt.

6. Verfahren zum Färben von amidgruppenhaltigen Materialien, dadurch gekennzeichnet, dass man Farbstoffe gemäss Anspruch 1 verwendet.

**Claims**

1. Chromium complex dyestuffs which, in the form of the free acid, correspond to the formula

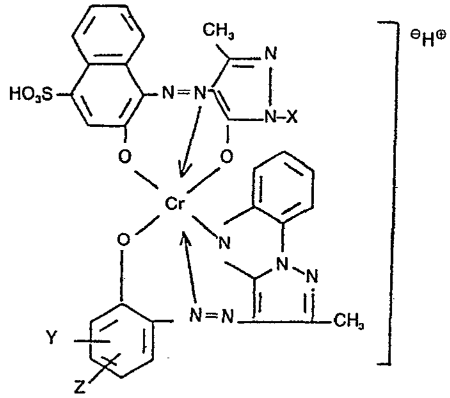

(I)

wherein

X denotes hydrogen, alkyl or aryl,

Y denotes hydrogen, nitro or chlorine and

Z denotes hydrogen, nitro, chlorine, alkyl, alkoxy, alkylsulphonyl, arylsulphonyl or $SO_2NW_1W_2$ and

$W_1$ and $W_2$ denote hydrogen or alkyl,

with the proviso that Y and Z do not simultaneously represent nitro.

2. Chromium complex dyestuffs according to Claim 1, characterised in that the alkyl and alkoxy radicals mentioned therein contain 1–4 C atoms and the aryl radicals are phenyl radicals which may be substituted by Cl, Br, $NO_2$, $C_1$–$C_4$-alkoxy or $C_1$–$C_4$-alkyl.

3. Chromium complex dyestuffs according to Claim 1 of the formula

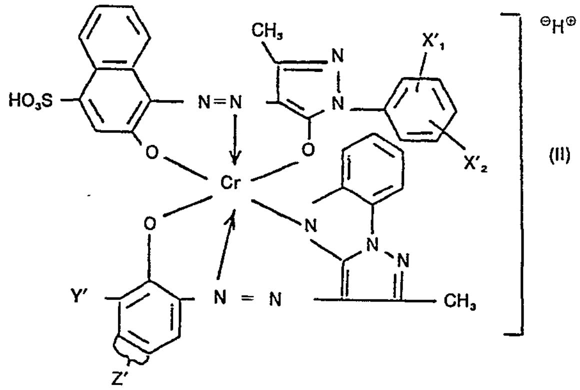

(II)

wherein

$X'_1$ and $X'_2$ denote H, Cl, $CH_3$ or $OCH_3$,

Y' denotes H, Cl or $NO_2$,

Z' denotes H, $NO_2$ or $SO_2W'_1W'_2$, or Cl and

$W'_1$ and $W'_2$ denote H or $C_1$–$C_2$-alkyl,

with the proviso that Y' and Z' do not simultaneously denote $NO_2$.

4. Chromium complex dyestuff according to Claim 1 of the formula

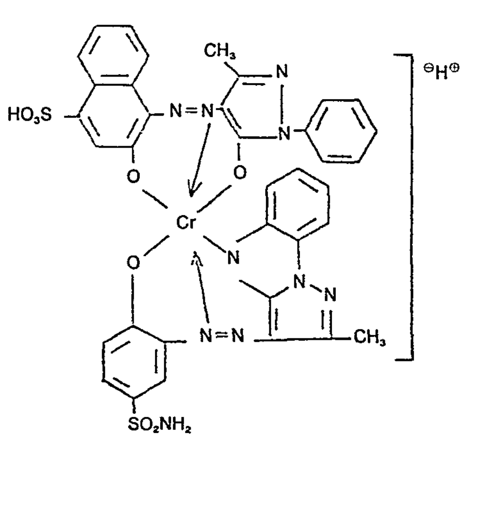

5. Process for preparing dyestuffs according to Claim 1, characterised in that one of the azo dyestuffs of the formulae

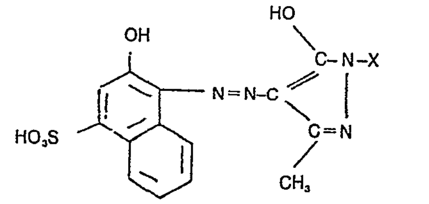

(III)

and

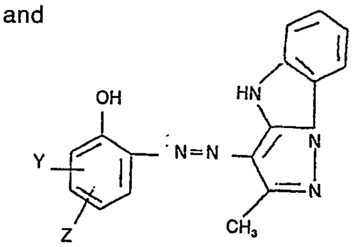

(IV)

is converted with a chromium-donating agent into a 1:1 chromium complex and the latter is then reacted with the non-metallised dyestuff of the formula (IV) or (III).

6. Process for dyeing materials containing amide groups, characterised in that dyestuffs according to Claim 1 are used.

**Revendications**

1. Colorants complexes de chrome qui, sous la forme de l'acide libre, répondent à la formule

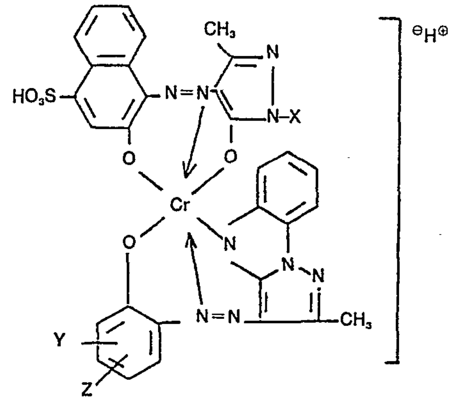

(I)

dans laquelle

X représente l'hydrogène, un groupe alkyle ou un groupe aryle,

Y représente l'hydrogène, un groupe nitro ou du chlore et

Z représente l'hydrogène, un groupe nitro, du chlore, un groupe alkyle, alkoxy, alkylsulfonyle, arylsulfonyle ou $SO_2NW_1W_2$ et

$W_1$ et $W_2$ désignent de l'hydrogène ou des groupes alkyle,

sous réserve que Y et Z ne répondent pas en même temps le groupe nitro.

2. Colorants complexes de chrome suivant la revendication 1, caractérisés en ce que les restes alkyle et alkoxy qui y sont mentionnés contiennent 1 à 4 atomes de carbone et les restes aryle sont des restes phényle éventuellement substitués par Cl, Br, un groupe $NO_2$, alkoxy en $C_1$ à $C_4$ ou alkyle en $C_1$ à $C_4$.

3. Colorants complexes de chrome suivant la revendication 1, de formule

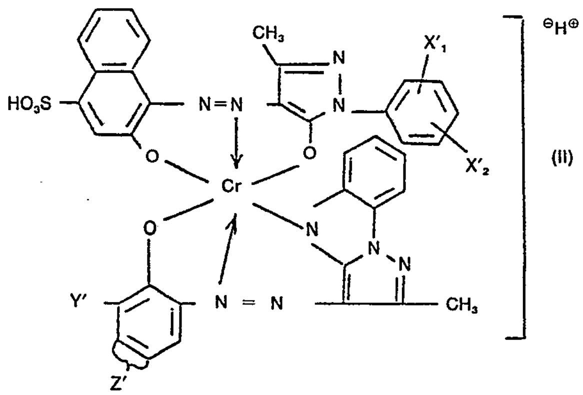

(II)

dans laquelle

X'$_1$ et X'$_2$ représentent H, Cl, $CH_3$ ou $OCH_3$,

Y' représente H, Cl ou $NO_2$,

Z' représente H, $NO_2$ ou $SO_2W'_1W'_2$, Cl

W'$_1$ et W'$_2$ représentent H ou un groupe alkyle en $C_1$ ou $C_2$,

sous réserve que Y' et Z' ne désignent pas en même temps $NO_2$.

4. Colorant complexe de chrome suivant la revendication 1, de formule

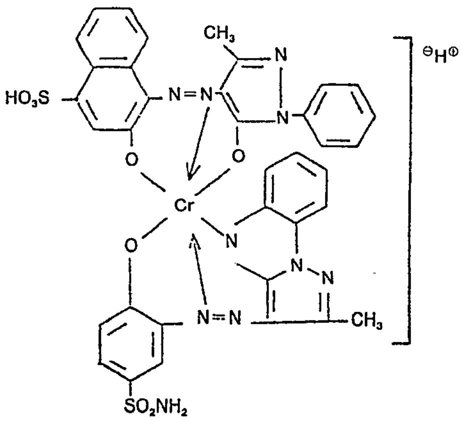

5. Procédé de production de colorants suivant la revendication 1, caractérisé en ce qu'on transforme l'un des colorants azoïques de formules

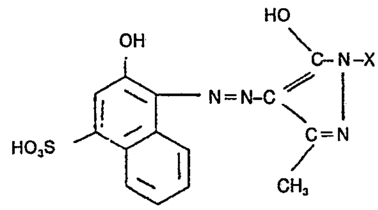

(III)

et

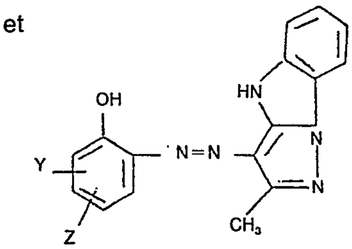

(IV)

avec un agent cédant du chrome en le complexe de chrome à 1:1 et on fait ensuite réagir ce dernier avec le colorant non métallé de formule (IV) ou (III).

6. Procédé de teinture de matières comportant des groupes amido, caractérisé en ce qu'on utilise des colorants suivant la revendication 1.